# EUROPEAN PATENT APPLICATION

(11) **EP 4 654 441 A1**
(43) Date of publication of application: **26.11.2025**
(21) Application number: 24744591.9
(22) Date of filing: 12.01.2024
(51) Int. Cl.: H02K 5/04

(54) **STATOR STRUCTURE AND ROTARY ELECTRIC MACHINE**

(30) Priority: 17.01.2023 JP 2023004920
(71) Applicant: Meidensha Corporation, Tokyo 141-6029 (JP)
(72) Inventor: OISHI, Takahiko, Tokyo 141-6029 (JP); TAKAHASHI, Yohei, Tokyo 141-6029 (JP)
(74) Representative: Müller-Boré & Partner Patentanwälte PartG mbB
(86) International application number: PCT/JP2024/000657
(87) International publication number: WO 2024/154668

(57) **Abstract**

An object is to improve a degree of freedom of a position of a flow path of refrigerant liquid in a frame of a rotating electric machine. A stator structure includes a stator including a stator core and a stator coil wound around the stator core, a bus ring including a bus bar to which the stator coil is connected and having an outer diameter larger than an outer diameter of the stator core, a frame that accommodates the stator core on a radially inner side, the frame including a flow path of refrigerant liquid that opens at an end on one side in an axial direction and extends toward the other side in the axial direction, and a lid member that is arranged on one side in the axial direction of the frame and on the other side in the axial direction of the bus ring, closes an opening of the flow path, and holds the bus ring, in which the lid member is fixed to the frame.

## Description

### Technical Field

The present invention relates to a stator structure and a rotating electric machine.

### Background Art

For example, in a three-phase AC motor, a structure is known in which stator coils of respective phases wound around a stator core are connected by bus bars for respective phases, and the bus bars for the respective phases are integrated by a bus ring (for example, Patent Literature 1). The bus bar is an annular conductor.

As a cooling structure of a motor, a structure is known in which a flow path is provided on a frame covering an outer periphery of a stator, and refrigerant liquid such as water is allowed to flow in the flow path to cool the stator and the like (for example, Patent Literature 2).

### Citation List

### Patent Literature

Patent Literature 1: JP 2019-154084 A
Patent Literature 2: WO 2013/069321 A

### Summary of Invention

### Technical Problem

A frame of a motor is manufactured using a mold as aluminum die casting, for example. In this case, in order to form a flow path in the frame, it is necessary to form the flow path in a shape opened to outside of the frame for demolding. In order to cool a stator in an axial direction, it is necessary to extend the flow path in an axial direction, and in this case, the opening for demolding is arranged at an end in the axial direction of the frame. The opening at the end in the axial direction of the frame can be closed in a circumferential direction by covering with a bracket that covers the end in the axial direction of the stator.

Note that, it is desirable to prevent an increase in size in the axial direction of the motor by arranging a bus ring on a radially outer side of a coil end, which is an end in the axial direction of the stator coil. The bus ring requires a thickness in the axial direction and a width in a radial direction depending on magnitude of a flowing current and required mechanical strength. Since the bracket needs to have a size that covers the bus ring, in a case where the bus ring is large in the radial direction, a flow path that closes the opening with the bracket must also be provided on the radially outer side.

An outer periphery of the stator core is in contact with an inner periphery of the frame, and the stator core is cooled by the refrigerant liquid flowing in the flow path of the frame; however, when the flow path is arranged on the radially outer side as described above, the flow path is separated from the stator core, and there has been a problem that cooling efficiency deteriorates. When the flow path is arranged on the radially outer side, the frame becomes thick in the radial direction, so that there has been a problem that the weight and size increase.

An object of the present invention is to improve a degree of freedom of a position of a flow path of refrigerant liquid in a frame of a rotating electric machine.

### Solution to Problem

A stator structure according to an aspect of the present invention includes a stator including a stator core and a stator coil wound around the stator core, a bus ring including a bus bar to which the stator coil is connected and having an outer diameter larger than an outer diameter of the stator core, a frame that accommodates the stator core on a radially inner side, the frame including a flow path of refrigerant liquid that opens at an end on one side in an axial direction and extends toward the other side in the axial direction, and a lid member that is arranged on one side in the axial direction of the frame and on the other side in the axial direction of the bus ring, closes an opening of the flow path, and holds the bus ring, in which the lid member is fixed to the frame.

In the stator structure according to an aspect, an opening of the flow path is located on a radially inner side of the outer diameter of the bus ring.

The stator structure according to an aspect further includes a bracket that covers one side in the axial direction of the stator core from one side in the axial direction and radially outer side, and the bracket is fixed to the frame or the lid member.

A rotating electric machine according to an aspect of the present invention includes the stator structure, a rotor arranged on a radially inner side of the stator core, and an inverter arranged on one side in an axial direction of the stator structure and drives the rotating electric machine.

The rotating electric machine according to an aspect is for driving an automobile.

### Advantageous Effects of Invention

An object of an aspect of the present invention is to improve a degree of freedom of a position of a flow path of refrigerant liquid in a frame of a rotating electric machine.

### Brief Description of Drawings

Fig. 1 is an exploded perspective view schematically illustrating a stator structure according to a first embodiment of the present invention.
Fig. 2 is a side cross-sectional view illustrating a state in which a stator structure 100 of Fig. 1 is assembled.
Fig. 3 is a perspective view illustrating a lid member 120 of Fig. 1.

### Description of Embodiments

Hereinafter, a stator structure according to an embodiment of the present invention will be described with reference to the drawings. Note that, in the following drawings, scales, numbers and the like in each structure might be different from those in an actual structure in order to facilitate understanding of each structure. Each configuration is schematically illustrated in a shape different from an actual shape for easier viewing.

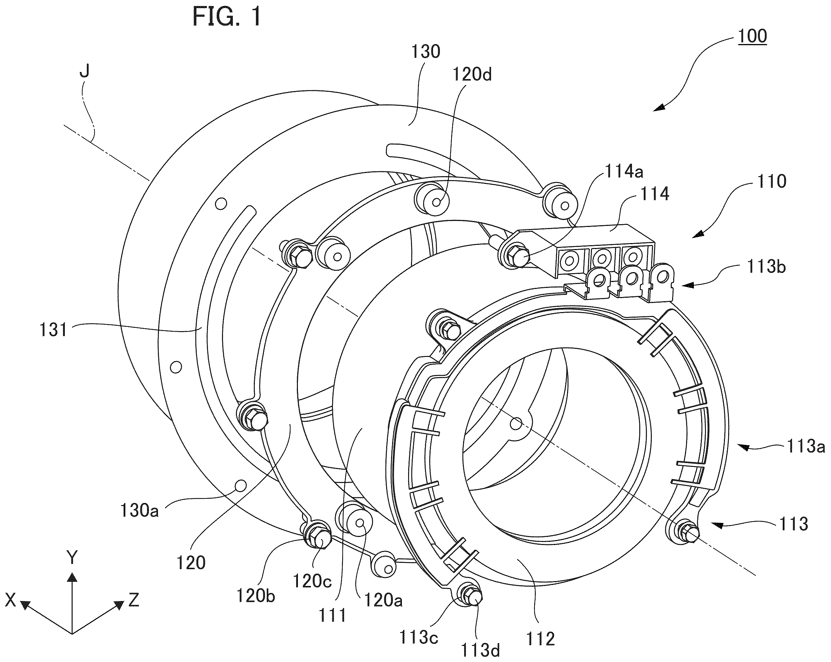

In the drawings, an XYZ coordinate system is appropriately illustrated as a three-dimensional orthogonal coordinate system. In the XYZ coordinate system, an X-axis direction is a direction parallel to an axial direction of a central axis J illustrated in Fig. 1. A Y-axis direction is a vertical direction in Fig. 1 in a radial direction with respect to the central axis J. A Z-axis direction is a direction orthogonal to both the X-axis direction and the Y-axis direction. In any of the X-axis direction, the Y-axis direction, and the Z-axis direction, a side indicated by an arrow in the drawing is defined as a positive side, and an opposite side is defined as a negative side.

In the following description, a negative side (-X side) in the X-axis direction is referred to as "one side", and a positive side (+X side) in the X-axis direction is referred to as "the other side". Note that, one side and the other side are used merely for description, and do not limit actual positional relationship and direction. Unless otherwise specified, the direction (X-axis direction) parallel to the central axis J is simply referred to as the "axial direction", the radial direction centered on the central axis J is simply referred to as the "radial direction", and a circumferential direction centered on the central axis J, that is, a direction around the central axis J is simply referred to as a "circumferential direction". A side approaching the central axis J in the radial direction is referred to as a "radially inner side", and a side away from the central axis J is referred to as a "radially outer side".

Note that, in the present specification, "extending in the axial direction" includes not only a case of strictly extending in the axial direction (X-axis direction) but also a case of extending in a direction at an angle of less than 45° with respect to the axial direction. In the present specification, "extending in the radial direction" includes not only a case of strictly extending in the radial direction, that is, a direction perpendicular to the axis direction (X-axis direction) but also a case of extending in a direction at an angle of less than 45° with respect to the radial direction. "Parallel" includes not only a case of being strictly parallel but also a case of tilting at an angle of less than 45°.

### <First Embodiment>

Fig. 1 is an exploded perspective view schematically illustrating a stator structure according to a first embodiment of the present invention. A stator structure 100 forms a periphery of a stator of a motor, which is an example of a rotating electric machine. The stator structure 100 forms, for example, a three-phase AC motor. The stator structure 100 includes a stator 110, a lid member 120, a frame 130, a bus ring 113, and a terminal block 114. The motor including the stator structure 100 includes a rotor arranged on a radially inner side of the stator 110, but the rotor is not illustrated.

The stator 110 includes a cylindrical stator core 111 and stator coils 112 for respective phases wound around the stator core 111. The bus ring 113 includes bus bar 113a for respective phases. Ends of the stator coils 112 for the respective phases are electrically connected to the bus bars 113a for the respective phases. An outer diameter of the bus ring 113 is larger than an outer diameter of the stator core 111. An outer peripheral end of the bus ring 113 is located on a radially outer side of an outer peripheral end of the stator core 111.

The terminal block 114 holds terminals 113b of the bus bars 113a for the respective phases so that they are easily externally connected. An inverter that drives the motor is arranged on one side in an axial direction of the motor having the stator structure 100, and each terminal of the terminal block 114 is electrically connected to the inverter. The motor having the stator structure 100 is for driving an automobile, for example.

The frame 130 has a cylindrical shape and accommodates the stator core 111 on a radially inner side. The frame 130 and the stator core 111 are fixed to each other by shrink fitting, for example. The frame 130 includes a flow path 131 that is a flow path of refrigerant liquid. The refrigerant liquid is, for example, water. The flow path 131 opens at an end on one side in the axial direction of the frame 130 and extends from the opening toward the other side in the axial direction. The frame 130 is manufactured using a mold such as aluminum die casting, for example. Since the flow path 131 includes an opening at the end on one side in the axial direction of the frame 130, a shape of the flow path 131 can be demolded when the frame 130 is manufactured.

The lid member 120 is a member that covers and closes the opening at the end on one side in the axial direction of the frame 130 so as to prevent the refrigerant liquid from leaking from the opening when the refrigerant liquid is allowed to flow into the flow path 131. The lid member 120 is arranged on one side in the axial direction of the frame 130 and on the other side in the axial direction of the bus ring 113. The lid member 120 is an annular member and includes a surface at a position facing the opening at the end on one side in the axial direction of the frame 130 to close the opening when being fixed to the end on one side in the axial direction of the frame 130. It is desirable to provide a seal with a liquid gasket or the like between the frame 130 and the lid member 120 around the opening. The stator 110 is cooled by the refrigerant liquid flowing through the flow path 131. The refrigerant liquid in the flow path 131 is circulated, for example, by a pump or the like via an inlet and an outlet provided on a side surface of the frame 130, for example.

The stator structure 100 includes a bolt 120c. The lid member 120 includes a bolt hole 120b into which the bolt 120c is inserted. The frame 130 includes a bolt hole 130a into which the bolt 120c is inserted. The bolt 120c fixes and holds the lid member 120 to the frame 130 such that the surface on the other side in the axial direction of the lid member 120 is in contact with the surface on one side in the axial direction of the frame 130. The bolt 120c, the bolt hole 120b, and the bolt hole 130a are an example of a holding structure for holding the lid member 120 on the frame 130. A plurality of bolts 120c, bolt holes 120b, and bolt holes 130a are provided in a circumferential direction.

The stator structure 100 includes a bolt 113d. The bus ring 113 includes a bolt hole 113c into which the bolt 113d is inserted. The lid member 120 includes a bolt hole 120a into which the bolt 113d is inserted. The bolt 113d fixes and holds the bus ring 113 to the lid member 120 such that the surface on the other side in the axial direction of the bus ring 113 is in contact with the surface on one side in the axial direction of the lid member 120. The bolt 113, the bolt hole 113c, and the bolt hole 120a are an example of a holding structure for holding the bus ring 113 to the lid member 120. A plurality of bolts 113, bolt holes 113c, and bolt holes 120a are provided in a circumferential direction.

The stator structure 100 includes a bolt 114a. The lid member 120 includes a bolt hole 120d into which the bolt 114a is inserted. The terminal block 114 is fixed to the lid member 120 by the bolt 114a. The bolt 114a and the bolt hole 120d are provided on both sides of the terminal block 114 in the circumferential direction.

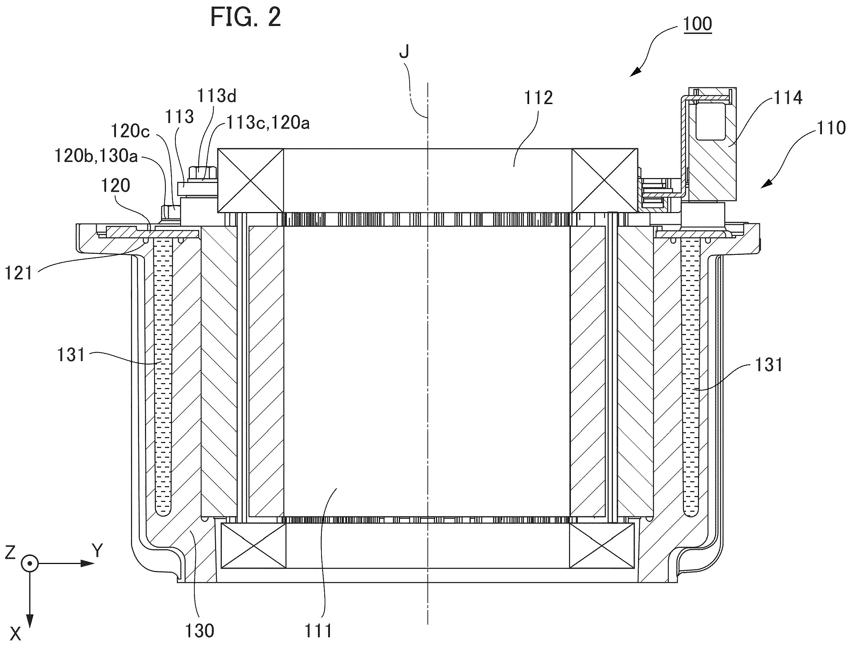

Fig. 2 is a side cross-sectional view illustrating a state in which the stator structure 100 of Fig. 1 is assembled. Fig. 2 is a cross-sectional view taken along a plane passing through the central axis J and orthogonal to a Z axis. One side in the axial direction of the stator core 112 may be covered with a bracket from one side in the axial direction and radially outer side. The bracket is bolted to the frame 130 or the lid member 120 at a site different from a bolt fixing position between the frame 130 and the lid member 120.

The bus ring 113 is arranged on a radially outer side of a coil end on one side in the axial direction of the stator coil 112. At least a part of the bus ring 113 overlaps the lid member 120 in the axial direction. At least a part of the lid member 120 overlaps the frame 130 in the axial direction. In the flow path 131, a radial length on the other side in the axial direction is shorter than a radial length on one side in the axial direction. With such a shape, demolding of the shape of the flow path 131 is performed smoothly when the frame 130 is manufactured.

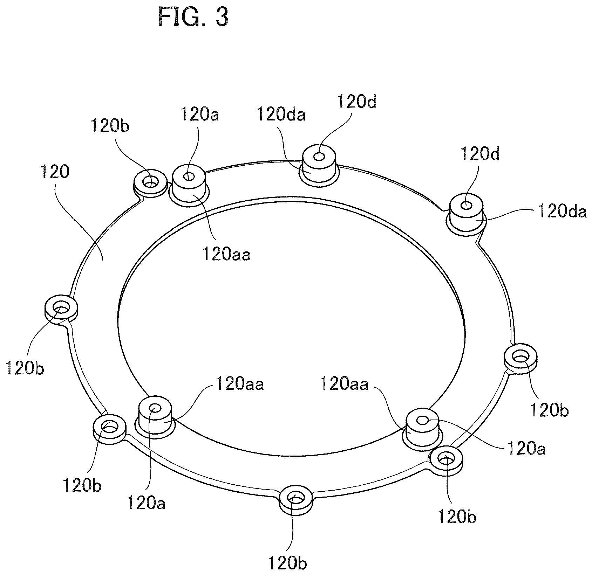

Fig. 3 is a perspective view illustrating the lid member 120 of Fig. 1. In the present embodiment, six bolt holes 120b are arranged on the lid member 120 in the circumferential direction. That is, six combinations of the bolt 120c, the bolt hole 120b, and the bolt hole 130a are arranged in the circumferential direction. The number of the bolts 120c, the bolt holes 120b, and the bolt holes 130a is not limited thereto, and may be any number as long as the opening of the flow path 131 of the frame 130 can be stably closed by the lid member 120.

In the present embodiment, three bolt holes 120a are arranged on the lid member 120 in the circumferential direction. That is, three combinations of the bolt 113d, the bolt hole 113c, and the bolt hole 120a are arranged in the circumferential direction. The number of the bolts 113d, the bolt holes 113c, and the bolt holes 120a is not limited thereto, and may be any number as long as the bus ring 113 can be stably held on the lid member 120.

Note that, the bolt hole 120a is provided on a protrusion 120aa protruding from the surface on one side in the axial direction of the lid member 120 toward one side in the axial direction. With such a configuration, the lid member 120 can hold the bus ring 113 to be separated therefrom in the axial direction, and a degree of freedom of the shape of the bus ring 113 can be increased.

In the present embodiment, the bus ring 113 is not directly held by the frame 130, but is held by the lid member 120. As a result, the holding structure that holds the bus ring 113 does not need to avoid the position of the opening of the flow path 131 in the radial direction, and the degree of freedom of the bus ring and the frame can be improved. As a result, a size of the motor can be reduced, and a weight thereof can be reduced.

In the present embodiment, since the opening of the flow path 131 in the frame 130 can be closed not by the bracket but by the lid member 120, a radial position of the flow path 131 can be determined regardless of the shape of the bus ring 113. Therefore, the flow path 131 can be arranged on the inner diameter side of the frame 130, that is, on a side closer to the stator core 111, so that cooling efficiency can be improved, and the size and weight of the motor can be reduced.

The present invention is not limited to the above-described embodiments, and various improvements and design changes may be made without departing from the gist of the present invention. In addition, the embodiments disclosed herein are to be considered in all respects as illustrative and not restrictive. The scope of the present invention is indicated not by the above description but by claims, and it is intended that meanings equivalent to claims and all changes within the scope are included.

The present application claims priority based on Japanese Patent Application No. 2023-004920 filed on January 17, 2023, the entire contents of which are incorporated herein by reference.

### Reference Signs List

- 100: Stator structure
- 110: Stator
- 120: Lid member
- 113: Bus ring
- 130: Frame

## Claims

1. A stator structure comprising:
a stator including a stator core and a stator coil wound around the stator core;
a bus ring including a bus bar to which the stator coil is connected and having an outer diameter larger than an outer diameter of the stator core;
a frame that accommodates the stator core on a radially inner side, the frame including a flow path of refrigerant liquid that opens at an end on one side in an axial direction and extends toward the other side in the axial direction; and
a lid member that is arranged on one side in the axial direction of the frame and on the other side in the axial direction of the bus ring, closes an opening of the flow path, and holds the bus ring,
wherein the lid member is fixed to the frame.

2. The stator structure according to claim 1, wherein
the opening of the flow path is located on a radially inner side of the outer diameter of the bus ring.

3. The stator structure according to claim 1, further comprising:
a bracket that covers one side in the axial direction of the stator core from one side in the axial direction and radially outer side, and
the bracket is fixed to the frame or the lid member.

4. A rotating electric machine comprising:
the stator structure according to claim 1;
a rotor arranged on a radially inner side of the stator core; and
an inverter arranged on one side in an axial direction of the stator structure and drives the rotating electric machine.

5. The rotating electric machine according to claim 4, for driving an automobile.
